# EUROPÄISCHE PATENTANMELDUNG

(11) **EP 2 469 144 A2**
(43) Veröffentlichungstag der Anmeldung: **27.06.2012**
(21) Anmeldenummer: 11193680.3
(22) Anmeldetag: 15.12.2011
(51) Int. Cl.: F16L 27/02, F16L 27/08

(54) **Dreh- und Schwenkverbindung für Hochdrucksysteme**

(30) Priorität: 23.12.2010 DE 202010016929 U
(71) Anmelder: Parker Hannifin Manufacturing Germany GmbH & Co. KG, 33659 Bielefeld (DE)
(72) Erfinder: Weinhandl, Franz, 8484 Weisslingen (CH); Levin, Maxim, 69469 Weinheim (DE); Szekeres, Robert, 76887 Bad Bergzabern (DE)
(74) Vertreter: Müller, Karl-Ernst

(57) **Zusammenfassung**

Eine Dreh- und Schwenkverbindung für Hochdrucksysteme, wie Hochdruckpumpen, Schlauchleitungen oder Arbeitsgeräte, bestehend aus zwei aneinander gehalterten, um eine Schwenkachse gegeneinander schwenkbarren und jeweils wenigstens einen externen Anschluss für einen Bestandteil eines Hochdrucksystems aufweisenden Gehäuseteilen, wobei in jedem Gehäuseteil ein Durchleitungskanal für das im Hochdrucksystem strömende Fluid angeordnet ist, ist dadurch gekennzeichnet, dass in einem ersten Gehäuseteil (11) eine dessen Durchleitungskanal (14) ausbildende Hohlwelle (12) um eine ihrer Längsachse entsprechende Drehachse (13) drehbar in dem ersten Gehäuseteil (11) angeordnet ist, und dass zur Halterung der Gehäuseteile (11,25) aneinander die Hohlwelle (12) mit einem Lageransatz (21) in eine in dem zweiten Gehäuseteil (25) ausgebildete Aufnahmeöffnung (26) hineinragt und das zweite Gehäuseteil (25) um den Lageransatz (21) um eine senkrecht zur Drehachse (13) der Hohlwelle (12) verlaufende Schwenkachse (29) schwenkbar ist, wobei in dem zweiten Gehäuseteil (25) ein drehfest mit der Hohlwelle (12) verbundenes und einen Durchleitungskanal (28) ausbildendes Achsenstück (27) als Schwenkachse (29) für das zweite Gehäuseteil (25) derart angeordnet ist, dass sich bei Drehung der Hohlwelle (12) in dem ersten Gehäuseteil (11) das zweite Gehäuseteil (25) gemeinsam mit dem von der Hohlwelle (12) mitgenommenen Achsenstück (27) mitdreht, und dass der Durchleitungskanal (14) der Hohlwelle (12) und der Durchleitungskanal (28) des Achsenstücks (27) in allen Schwenkstellungen des zweiten Gehäuseteils (25) zum ersten Gehäuseteil (11) miteinander in Verbindung stehen.

## Beschreibung

Die Erfindung betrifft eine Dreh- und Schwenkverbindung für Hochdrucksysteme, wie Hochdruckpumpen, Schlauchleitungen oder Arbeitsgeräte, bestehend aus zwei aneinander gehalterten, um eine Schwenkachse gegeneinander schwenkbaren und jeweils wenigstens einen externen Anschluss für einen Bestandteil eines Hochdrucksystems aufweisenden Gehäuseteilen, wobei in jedem Gehäuseteil ein Durchleitungskanal für das im Hochdrucksystem strömende Fluid angeordnet ist.

Bei aus mehreren Komponenten zusammengestellten Hochdrucksystemen erfolgt eine Verbindung der einzelnen Komponenten miteinander standardmäßig über Gewindeverbindungen, was dazu führt, dass die einzelnen Komponenten starr miteinander verbunden sind. Dies kann beispielsweise die Handhabung einer mittels eines Hochdruckschlauches mit einer Hochdruckpumpe verbundenen Hochdruck-Spritzpistole sehr erschweren. Hochdruckschläuche sind aufgrund ihrer Bauart wenig flexibel, was die Handhabung der daran angeschlossenen Geräte erschwert, und eine starre Verbindung kann auch zu einem Verwinden oder Knicken des Hochdruckschlauches während der Handhabung der Komponenten führen. Es besteht daher die Anforderung, die Verbindung der einzelnen Komponenten miteinander so auszuführen, dass eine uneingeschränkte Handhabung der Komponenten mit möglichst wenig Kraftaufwand gegeben ist.

Hierzu ist aus der US 4,437,690 A bereits eine Schwenkverbindung bekannt, bei der ein Schwenken von zwei jeweils mit einem externen Anschluss an unterschiedliche Komponenten eine Hochdrucksystems anschließbaren Gehäuseteilen um eine senkrecht zu einer gemeinsamen Längsachse der angeschlossenen Komponenten verlaufende Schwenkachse vorgesehen ist. In jedem Gehäuseteil ist ein gewinkelter Durchleitungskanal ausgebildet, und die Gehäuseteile sind seitlich so aneinander angesetzt und über ein die Schwenkachse bildendes Verbindungsmittel miteinander verbunden, dass die aus der Anschlussrichtung der externen Anschlüsse abgewinkelten Teile des jeweiligen Durchleitungskanals miteinander fluchten. Da eine solche Schwenkverbindung jedoch eine Verdrehung beziehungsweise Verwindung der Komponenten um deren Längsachse nicht ausgleichen kann, ist die Schwenkmöglichkeit der Gehäuseteile allein nicht ausreichend.

Weiterhin ist aus der EP 0 232 178 A2 eine Drehverbindung für Schläuche bekannt, bei der die Schlauchenden der Schläuche aneinander derart festgelegt sind, dass eine Verdrehung der Schläuche um deren Längsachse möglich ist. Hierzu ist eine spezielle Kupplungsmuffe vorgesehen, in der die stirnseitig aneinander stoßenden Schlauchenden von einem gemeinsamen Lagerteil umfasst sind und ein die Durchleitungskanäle der Schläuche an den Schlauchenden verbindendes und die Stoßstelle zwischen den Schlauchenden überbrückendes rohrförmiges Dichtungselement angeordnet ist. Diese Verbindung ermöglicht wiederum keine Verschwenkung der Schlauchenden aus einer gemeinsamen Schlauchlängsachse heraus und ist zudem kompliziert aufgebaut.

Der Erfindung liegt daher die Aufgabe zugrunde, eine Verbindung von Komponenten eines Hochdrucksystems zur Verfügung zu stellen, die sowohl eine Verdrehung der Komponenten als auch deren Verschwenkung zueinander ermöglicht und zudem einen einfach zu handhabenden Aufbau aufweist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass in einem ersten Gehäuseteil eine dessen Durchleitungskanal ausbildende Hohlwelle um eine ihrer Längsachse entsprechende Drehachse drehbar in dem ersten Gehäuseteil angeordnet ist, und dass zur Halterung der Gehäuseteile aneinander die Hohlwelle mit einem Lageransatz in eine in dem zweiten Gehäuseteil ausgebildete Aufnahmeöffnung hineinragt und das zweite Gehäuseteil um den Lageransatz um eine senkrecht zur Drehachse der Hohlwelle verlaufende Schwenkachse schwenkbar ist, wobei in dem zweiten Gehäuseteil ein drehfest mit der Hohlwelle verbundenes und einen Durchleitungskanal ausbildendes Achsenstück als Schwenkachse für das zweite Gehäuseteil derart angeordnet ist, dass sich bei Drehung der Hohlwelle in dem ersten Gehäuseteil das zweite Gehäuseteil gemeinsam mit dem von der Hohlwelle mitgenommenen Achsenstück mitdreht, und dass der Durchleitungskanal der Hohlwelle und der Durchleitungskanal des Achsenstücks in allen Schwenkstellungen des zweiten Gehäuseteils zum ersten Gehäuseteil miteinander in Verbindung stehen.

Einerseits ermöglicht die Erfindung eine Verdrehung der jeweils an die externen Anschlüsse von erstem und zweitem Gehäuseteil angeschlossenen Komponenten gegeneinander, weil die Gehäuseteile relativ zueinander um eine in dem einen Gehäuseteil aufgrund der drehbaren Anordnung der Hohlwelle darin ausgebildete Drehachse verdrehbar sind. Aufgrund der drehfesten Verbindung zwischen der drehbaren Hohlwelle und dem in dem zweiten Gehäuseteils festgelegten Achsenstück lässt sich einerseits die Hohlwelle in dem ersten Gehäuseteil beliebig drehen, wobei sich das zweite Gehäuseteil jeweils mitdreht, und es lässt sich andererseits das zweite Gehäuseteil seinerseits gegenüber dem ersten, beispielsweise festliegenden Gehäuseteil über die Verdrehung der an das Achsenstück des zweiten Gehäuseteils angeschlossenen Hohlwelle verdrehen. Gleichzeitig ist eine Verschwenkung des zweiten Gehäuseteils um das in ihm angeordnete und aufgrund der Verbindung mit der Hohlwelle jeweils festliegende Achsenstück als Schwenkachse möglich, sodass die beiden Gehäuseteile zusätzlich zu ihrer gegenseitigen Verdrehbarkeit auch unterschiedliche Winkelstellungen zueinander einnehmen können. Insofern stellt die erfindungsgemäße Dreh- und Schwenkverbindung gleichzeitig zwei Freiheitsgrade in der Ausrichtung von Komponenten eines Hochdrucksystems zueinander zur Verfügung.

Nach einem Ausführungsbeispiel der Erfindung ist vorgesehen, dass der Lageransatz der Hohlwelle ringförmig mit einem inneren Auge ausgebildet ist und der Durchleitungskanal der Hohlwelle in das Auge mündet und dass das Achsenstück des zweiten Gehäuseteils in das innere Auge des ringförmigen Ansatzes der Hohlwelle eingesteckt und der in dem Achsenstück ausgebildete Durchleitungskanal in Richtung auf den in das Auge des Lageransatzes einmündenden Durchleitungskanal der Hohlwelle angewinkelt ist. Hierdurch ist das fest in dem zweiten Gehäuseteil angeordnete Achsenstück drehfest an die Hohlwelle angeschlossen, sodass sich Hohlwelle und zweites Gehäuseteil jeweils miteinander drehen.

Soweit es darauf ankommt, dass der in der Hohlwelle ausgebildete Durchleitungskanal jeweils mit dem in dem rechtwinklig zur Hohlwelle ausgerichteten Achsenstück vorhandenen Durchleitungskanal in Verbindung steht, ist vorgesehen, dass in dem in das innere Auge der Hohlwelle eingesteckten Bereich des Achsenstücks eine rechtwinklig zu dessen Längsachse ausgerichtete und im Verlauf der Drehachse der Hohlwelle liegende Querbohrung angeordnet und auf dem äußeren Umfang des Achsenstücks eine umlaufende Nut ausgebildet ist, in die die Querbohrung mit ihren beiden Enden mündet. Aufgrund der in dem Achsenstück ausgebildeten Nut, die mit dem Durchleitungskanal der Hohlwelle jeweils fluidleitend in Verbindung steht, ist gewährleistet, dass auch bei einer Verdrehung des in den Lageransatz der Hohlwelle eingesteckten Achsenstücks gegenüber der Längsachse der Hohlwelle mit dem entsprechend darin verlaufenden Durchleitungskanal eine Verbindung der Durchleitungskanäle in Hohlwelle und Achsenstück gegeben ist, weil über den Ringraum und die daran beidseitig angeschlossene Querbohrung in jeder Drehstellung des Achsenstücks zur Hohlwelle eine Verbindung zwischen den Durchleitungskanälen von Hohlwelle und Achsenstück besteht.

Hinsichtlich der Zuordnung der externen Anschlüsse von erstem und zweitem Gehäuseteil zueinander kann vorgesehen sein, dass die Anschlüsse einander gegenüberliegend auf der Drehachse der Hohlwelle angeordnet sind und in dem zweiten Gehäuseteil ein Verbindungskanal zwischen dem externen Anschluss des zweiten Gehäuseteils und dem Ende des rechtwinklig zur Drehachse der in dem ersten Gehäuseteil angeordneten Hohlwelle verlaufenden, in dem Achsenstücks ausgebildeten. Durchleitungskanals ausgebildet ist.

Hinsichtlich der drehbaren Anordnung der Hohlwelle in dem ersten Gehäuseteil kann nach einem Ausführungsbeispiel der Erfindung vorgesehen sein, dass die Hohlwelle in dem ersten Gehäuseteil mittels eines zwischen Hohlwelle und Gehäuseteil angeordneten Kugellagers drehbar gelagert ist. Hierbei kann vorgesehen sein, dass das Kugellager axial mittels einer formschlüssig in die Hohlwelle und in das Gehäuseteil eingreifenden Scheibenanordnung gegen axial an der Hohlwelle auftretende Kräfte abgestützt ist.

Zur radialen Aufweitsicherung kann weiterhin vorgesehen sein, dass das erste Gehäuseteil in dem Bereich der Anordnung von Kugellager und Scheibenanordnung auf seiner Außenseite von einer aufgeschraubten Gehäusemutter umgriffen ist.

Die Schwenklagerung des zweiten Gehäuseteils um das in ihm angeordnete Achsenstück kann dadurch verwirklicht sein, dass das zweite Gehäuseteils um die durch das Achsenstück gebildete Schwenkachse mittels zweier auf den bezogen auf die das Achsenstücks rechtwinklig zu dessen Längsachse durchsetzenden Drehachse der Hohlwelle einander gegenüberliegenden Seiten des Achsenstücks angeordneter Kugellager schwenkbar gelagert ist, wobei vorgesehen sein kann, dass die Kugellager mittels eines in einer in der Verlaufsrichtung des Achsenstücks in dem zweiten Gehäuseteil ausgebildeten Montageöffnung eingeschraubten Gewindestutzens radial vorgespannt sind.

Bei Verwirklichung der Erfindung sind je nach Ausbildung der den Lageransatz aufnehmenden Aufnahmeöffnung in dem zweiten Gehäuseteil unterschiedliche Schwenkstellungen des zweiten Gehäuseteils zum ersten Gehäuseteil einzurichten. So kann nach einem Ausführung der Erfindung vorgesehen sein, dass die Aufnahmeöffnung für den Lageransatz der Hohlwelle in dem zweiten Gehäuseteil sich über die in der rechtwinklig zur Schwenkachse liegenden Schwenkebene gelegene Breite des zweiten Gehäuseteils erstreckt, sodass eine Verschwenkung des zweiten Gehäuseteils zum ersten Gehäuseteil um 180° möglich ist. Alternativ kann vorgesehen sein, dass die Aufnahmeöffnung für den Lageransatz der Hohlwelle in dem zweiten Gehäuseteil mit einer schräg in der rechtwinklig zur Schwenkachse gelegenen Schwenkebene ausgerichteten Begrenzungskante ausgebildet ist derart, dass eine Verschwenkung des zweiten Gehäuseteils zum ersten Gehäuseteil einseitig um 90° möglich ist. Auch jeder andere Schwenkwinkel ist durch eine entsprechende Ausgestaltung der Aufnahme in dem zweiten Gehäuseteil einstellbar.

In der Zeichnung sind Ausführungsbeispiele der Erfindung wiedergegeben, welche nachstehend beschrieben sind. Es zeigen:
- Fig. 1: Eine Dreh- und Schwenkverbindung für Hochdrucksysteme mit zwei jeweils einen externen Anschluss aufweisenden Gehäuseteilen in einer Schnittansicht,
- Fig. 2: die beiden Gehäuseteile in einer gegenüber Figur 1 um 90° gedrehten Schnittansicht in einer ersten Ausführungsform.
- Fig. 3: den Gegenstand der Figur 2 in einer abgewandelten Ausführungsform.

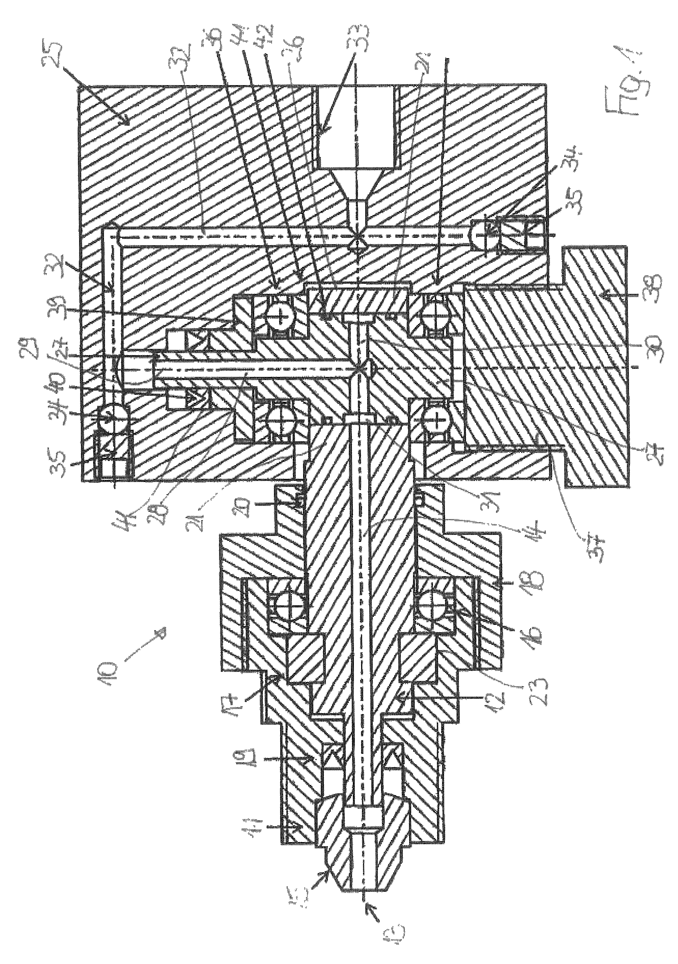

Die aus Figur 1 ersichtliche Dreh- und Schwenkverbindung 10 weist ein erstes Gehäuseteil 11 auf, an dessen (linken) Ende ein Anschlussstutzen 15 als externer Anschluss für einen Bestandteil eines Hochdrucksystems angeordnet ist. In dem ersten Gehäuseteil 11 ist eine dem Anschlussstutzen 15 zugeordnete Hohlwelle 12 um ihre als Drehachse 13 wirkende Längsachse drehbar angeordnet, wobei die Hohlwelle 12 einen sich in ihr von dem Anschlussstutzen 15 axial erstreckenden Durchleitungskanal 14 aufweist. Zur drehbaren Lagerung der Hohlwelle 12 ist in dem ersten Gehäuseteil 11 ein die Hohlwelle 12 außen umfassendes Kugellager 16 angeordnet, welches in dem ersten Gehäuseteil mittels einer Stützscheibenanordnung 17 axial festgelegt beziehungsweise abgestützt ist. Die vorzugsweise in Form von zwei Halbschalen ausgebildete Stützscheibenanordnung 17 greift in einen auf dem äußeren Umfang der Hohlwelle 12 ausgebildeten Einstich 23 ein und sorgt dabei für eine axiale Festlegung der Hohlwelle 12 mit Kugellager 16 im ersten Gehäuseteil 11. Ferner ist das erste Gehäuseteil 11 in dem Bereich der Anordnung von Kugellager 16 und Stützscheibenanordnung 17 auf seiner Außenseite von einer auf das erste Gehäuseteil 11 aufgeschraubten Gehäusemutter 18 umgriffen, die für eine radiale Abstützung des die Hohlwelle 12 umfassenden Kugellagers 16 sorgt. Ein Linienkontakt zwischen dem Anschlussstutzen 15 und dem ersten Gehäuseteil 11 sowie eine in dem ersten Gehäuseteil 11 angeordnete, die Hohlwelle 12 umfassende Dichtung 19 dichten das erste Gehäuseteil 11 und die Hohlwelle 12 nach außen ab; ferner ist zur weiteren Abdichtung der Hohlwelle 12 gegen die Umgebung in dem die Hohlwelle 12 umschließenden Bereich der Gehäusemutter 18 ein die Hohlwelle 12 außen umschließender O-Ring 20 angeordnet.

Die Hohlwelle 12 steht mit einem Lageransatz 21 auf der dem Anschlussstutzen 15 gegenüberliegenden Seite über das erste Gehäuseteil 11 beziehungsweise die Gehäusemutter 18 vor, wobei der Lageransatz 21 zum Anschluss eines zweiten Gehäuseteils 25 eingerichtet ist, welches auf seiner dem ersten Gehäuseteil 11 gegenüberliegenden Seite einen als Bohrung mit einem Innengewinde ausgebildeten externen Anschluss 33 zum Anschließen eines weiteren Bestandteils des Hochdrucksystems aufweist. Das zweite Gehäuseteil 25 ist mit einer in ihm ausgebildeten Aufnahmeöffnung 26 auf den Lageransatz 21 der Hohlwelle 12 aufgeschoben. In dem zweiten Gehäuseteil 25 ist eine Montagebohrung 41 ausgebildet, die einen rechtwinkligen Verlauf zur Drehachse 13 der Hohlwelle 12 aufweist. In diese Montagebohrung 41 ist ein Achsenstück 27 eingesetzt, welches das innere Auge 22 des Lageransatzes 21 der Hohlwelle 12 durchgreift, so dass hierdurch das zweite Gehäuseteil 25 drehfest mit der im ersten Gehäuseteil 11 drehbar gelagerten Hohlwelle 12 verbunden ist. Das Einsetzen des Achsenstücks 27 geschieht von einer in der Längsachse der Montagebohrung 41 ausgebildeten äußeren Montageöffnung 37 her.

Zur Ausbildung eines Fließweges für das durch die Dreh- und Schwenkverbindung 10 hindurch zu leitende Medium weist auch das Achsenstück 27 einen in seiner Längsachse verlaufenden Durchleitungskanal 28 auf, wobei die Längsachse des Achsenstücks 27 mit dem Durchleitungskanal 28 eine Schwenkachse 29 für eine Verschwenkung des zweiten Gehäuseteils 25 relativ zum ersten Gehäuseteil 11 bildet, Soweit der Durchleitungskanal 14 der Hohlwelle 12 und der Durchleitungskanal 28 des Achsenstücks 27 rechtwinklig zueinander ausgerichtet sind, ist in dem Achsenstück 27 am inneren Ende des Durchleitungskanals 28 eine Querbohrung 30 derart angeordnet, dass die Querbohrung 30 mit dem Durchleitungskanal 14 der Hohlwelle 12 fluchtet. Um in unterschiedlichen Schwenkstellungen des zweiten Gehäuseteils 25 zum ersten Gehäuseteils 11 eine fluidische Verbindung zu ermöglichen, ist auf dem äußeren Umfang des Achsenstücks 27 eine umlaufende, die Enden der Querbohrung 30 miteinander verbindende Nut 31 angeordnet, wobei der Durchleitungskanal 14 der Hohlwelle 12 in die Nut 31 des Achsenstücks 27 mündet, so dass in allen Schwenkstellungen des zweiten Gehäuseteils 25 mit Achsenstück 27 zum ersten Gehäuseteil 11 mit Hohlwelle 12 eine Fluidverbindung zwischen dem Durchleitungskanal 14 der Hohlwelle 12 und dem Durchleitungskanal 28 des Achsenstücks 27 über die Nut 31 und die davon ausgehende Querbohrung 30 gegeben ist. Zur Abdichtung des Achsenstücks 27 gegenüber der Innenfläche des Auges 22 des Lageransatzes 21 sind auf dem äußeren Umfang des Achsenstück 27 beidseitig des Anschlusses des Durchleitungskanals 14 der Hohlwelle 12 angeordnet O-Ringe 42 eingesetzt.

Der im rechten Winkel zur Längsachse des im zweiten Gehäuseteil 25 ausgebildeten externen Anschlusses 33 verlaufende Durchleitungskanal 28 des Achsenstücks 27 ist über einen im zweiten Gehäuseteil 25 angeordneten. entsprechend gewinkelten Verbindungskanal 32 mit dem externen Anschluss 33 verbunden. Soweit die beiden winklig zueinander stehenden Abschnitte des Verbindungskanals 32 jeweils von unterschiedlichen Seiten des zweiten Gehäuseteils 25 in das zweite Gehäuseteil einzubringen sind, sind die äußeren Enden der Verbindungskanalabschnitte jeweils durch eine eingesetzte Kugel 34 sowie eine darauf aufgeschraubte Schraube 35 verschlossen.

Zur Ausbildung eines Schwenklagers zum Verschwenken des zweiten Gehäuseteils 25 gegenüber dem ersten Gehäuseteil 11 sind zwischen dem zweiten Gehäuseteil 25 und dem in die Montagebohrung 41 des zweiten Gehäuseteils 25 eingesteckten Achsenstücks 27 zu beiden Seiten der Drehachse 13 der Hohlwelle 12 im ersten Gehäuseteil 11 jeweils Kugellager 36 angeordnet, so dass das zweite Gehäuseteil 25 um die durch das Einstecken des Achsenstücks 27 in das innere Auge 22 des Lageransatzes 21 der Hohlwelle 12 fest an das erste Gehäuseteil 11 gekoppelte Schwenkachse 29 schwenkbar ist. Die Kugellageranordnung stützt sich dabei in axialer Richtung der Hohlwelle 12 einerseits an einer in das Tiefste der zu diesem Zweck gestuft ausgebildeten Montagebohrung 41 eingesetzten Stützscheibe 39 ab, während auf der gegenüberliegenden Seite ein Gewindestutzen 38 in die den äußeren Ausgang der Montagebohrung 41 bildende Montageöffnung 37 eingeschraubt ist, mittels der die axiale Kraftbeaufschlagung der beiden Kugellager 36 einstellbar ist. Im Tiefsten der Montagebohrung 41 ist noch eine Dichtung 40 angeordnet, die den Ausgang des Durchleitungskanals 28 des Achsenstücks 27 und dessen Anschluss an den Verbindungskanal 32 des zweiten Gehäuseteils 25 gegen die Stützscheibenanordnung 39 mit dem dagegen liegenden Kugellager abdichtet. Im Betrieb wird die Druckkraft des den Durchleitungskanal 14 der Hohlwelle 12 und den Durchleitungskanal 28 des Achsenstücks 27 zum Verbindungskanal 32 des zweiten Gehäuseteils 25 hin durchströmenden Mediums über die Dichtung 40 und die Stützscheibenanordnung 39 auf die Kugellageranordnung 36 übertragen.

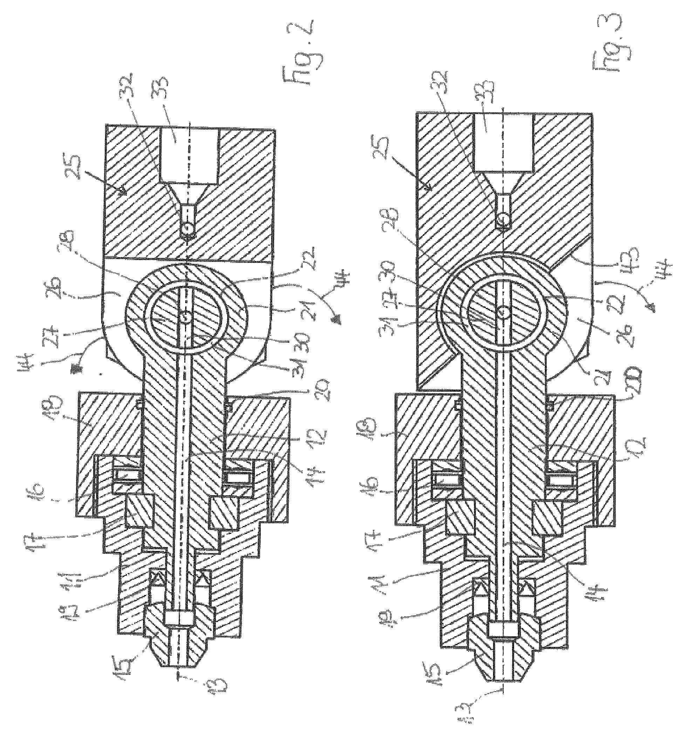

Bei der in Figur 1 dargestellten Dreh- und Schwenkverbindung 10 ist zunächst eine gemeinsame Verdrehung der Gehäuseteile 11 und 25 gegenüber dem Anschlussstutzen 15 als einem externen Anschluss der Dreh- und Schwenkverbindung an einem ersten Bestandteil eines Hochdrucksystems möglich. Kommt es beispielsweise zu einer Verdrehung des ersten Bestandteils des Hochdrucksystems, so kann diese Drehung ungehindert durch eine Drehung der an den Anschlussstutzen 15 angeschlossenen Hohlwelle 12 innerhalb des ersten Gehäuseteils 11 erfolgen, wobei diese Drehung über das mittels des in das innere Auge 22 des Lageransatzes 21 der Hohlwelle 12 eingesteckte Achsenstücks 27 des zweiten Gehäuseteils in eine Drehung des zweiten Gehäuseteils umgesetzt wird, soweit sich das zweite Gehäuseteil 25 immer mit der Hohlwelle 12 dreht. Gleichzeitig kann aber in jeder Drehstellung der Hohlwelle 12 zum ersten Gehäuseteil 11 zusätzlich eine Verschwenkung des zweiten Gehäuseteils 25 zum ersten Gehäuseteil 11 beziehungsweise zur Ausrichtung der Hohlwelle 12 erfolgen um die Schwenkachse 29, wie dies beispielsweise aus den Figuren 2 und 3 ersichtlich ist.

In Figur 2 ist dargestellt, dass die Aufnahmeöffnung 26 für den Lageransatz 21 der Hohlwelle 12 sich in dem zweiten Gehäuseteil 25 über die in der rechtwinklig zur Schwenkachse 29 liegenden Schwenkebene gelegene Breite des zweiten Gehäuseteils 25 erstreckt, so dass eine Verschwenkung des zweiten Gehäuseteils 25 zum ersten Gehäuseteil 11 um einen Winkel größer 120° in Richtung der Pfeile 44 möglich ist.

Bei einer derartigen Ausbildung der Aufnahmeöffnung ist allerdings wegen der sich über die Breite des zweiten Gehäuseteils 25 erstreckenden Aufnahmeöffnung 26 die Festigkeit des zweiten Gehäuseteils 25 eingeschränkt. Soweit das den Durchleitungskanal 14 der Hohlwelle 12 durchströmende Medium bei seinem Auftreffen auf das Achsenstück 27 eine axiale Kraft ausübt, die auf die Anordnung von Achsenstück 27 und Gewindestutzen 38 wirkt, entsteht im Innenbereich der Aufnahmeöffnung 26 ein Biegemoment, welches hohe Spannungen im zweiten Gehäuseteil 25 verursachen kann, Um dieses Biegemoment besser aufnehmen zu können, ist bei dem in Figur 3 dargestellten Ausbildungsbeispiel die Aufnahmeöffnung 26 mit einer schräg zur Drehachse 13 der Hohlwelle 12 ausgebildeten Begrenzungskante 43 ausgebildet, so dass in diesem Fall eine Verschwenkung des zweiten Gehäuseteils 25 zum ersten Gehäuseteil 11 nur nach einer Seite um einen Winkel bis zu 90° in Richtung des Pfeils 44 möglich ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Dreh- und Schwenkverbindung für Hochdrucksysteme, wie Hochdruckpumpen, Schlauchleitungen oder Arbeitsgeräte, bestehend aus zwei aneinander gehalterten, um eine Schwenkachse gegeneinander schwenkbaren und jeweils wenigstens einen externen Anschluss für einen Bestandteil eines Hochdrucksystems aufweisenden Gehäuseteilen, wobei in jedem Gehäuseteil ein Durchleitungskanal für das im Hochdrucksystem strömende Fluid angeordnet ist, **dadurch gekennzeichnet, dass** in einem ersten Gehäuseteil (11) eine dessen Durchleitungskanal (14) ausbildende Hohlwelle (12) um eine ihrer Längsachse entsprechende Drehachse (13) drehbar in dem ersten Gehäuseteil (11) angeordnet ist, und dass zur Halterung der Gehäuseteile (11,25) aneinander die Hohlwelle (12) mit einem Lageransatz (21) in eine in dem zweiten Gehäuseteil (25) ausgebildete Aufnahmeöffnung (26) hineinragt und das zweite Gehäuseteil (25) um den Lageransatz (21) um eine senkrecht zur Drehachse (13) der Hohlwelle (12) verlaufende Schwenkachse (29) schwenkbar ist, wobei in dem zweiten Gehäuseteil (25) ein drehfest mit der Hohlwelle (12) verbundenes und einen Durchleitungskanal (28) ausbildendes Achsenstücks (27) als Schwenkachse (29) für das zweite Gehäuseteil (25) derart angeordnet ist, dass sich bei Drehung der Hohlwelle (12) in dem ersten Gehäuseteil (11) das zweite Gehäuseteils (25) gemeinsam mit dem von der Hohlwelle (12) mitgenommenen Achsenstücks (27) mitdreht, und dass der Durchleitungskanal (14) der Hohlwelle (12) und der Durchleitungskanal (28) des Achsenstück (27) in allen Schwenkstellungen des zweiten Gehäuseteils (25) zum ersten Gehäuseteil (11) miteinander in Verbindung stehen.

2. Dreh- und Schwenkverbindung nach Anspruch 1, **dadurch gekennzeichnet, dass** der Lageransatz (21) der Hohlwelle (12) ringförmig mit einem inneren Auge (22) ausgebildet ist und der Durchleitungskanal (14) der Hohlwelle (12) in das Auge (22) mündet und dass das Achsenstücks (27) des zweiten Gehäuseteils (25) in das innere Auge (22) des ringförmigen Ansatzes (21) der Hohlwelle (12) eingesteckt und der in dem Achsenstück (27) ausgebildete Durchleitungskanal (28) in Richtung auf den in das Auge (22) des Lageransatzes (21) einmündenden Durchleitungskanal (14) der Hohlwelle (12) abgewinkelt ist.

3. Dreh- und Schwenkverbindung nach Anspruch 2, **dadurch gekennzeichnet, dass** in dem in das innere Auge (22) der Hohlwelle (12) eingesteckten Bereich des Achsenstücks (27) eine rechtwinklig zu dessen Längsachse ausgerichtete und im Verlauf der Drehachse (13) der Hohlwelle (12) liegende Querbohrung (30) angeordnet und auf dem äußeren Umfang des Achsenstücks (27) eine umlaufende Nut (31) ausgebildet, in die die Querbohrung (30) mit ihren beiden Enden mündet.

4. Dreh- und Schwenkverbindung nach einem der Ansprüche 1 bis 3. **dadurch gekennzeichnet, dass** die externen Anschlüsse (15,33) von erstem Gehäuseteil (11) und zweitem Gehäuseteil (25) einander gegentlherliegend auf der Drehachse (13) der Hohlwelle (12) angeordnet sind und in dem zweiten Gehäuseteil (25) ein Verbindungskanal (32) zwischen dem externen Anschluss (33) des zweiten Gehäuseteils (25) und dem Ende des rechtwinklig zur Drehachse (13) der in dem ersten Gehäuseteil (11) angeordneten Hohlwelle (12) verlaufenden, in dem Achsenstücks (27) ausgebildeten Durchleitungskanals (28) ausgebildet ist.

5. Dreh- und Schwenkverbindung nach einem der Ansprüche 1 bis 4, **dadurch gekennzeichnet, dass** die Hohlwelle (12) in dem ersten Gehäuseteil (11) mittels eines zwischen Hohlwelle (12) und Gehäuseteil (11) angeordneten Kugellagers (16) drehbar gelagert ist.

6. Dreh- und Schwenkverbindung nach Anspruch 5, **dadurch gekennzeichnet, dass** das Kugellager (16) axial mittels einer formschlüssig in die Hohlwelle (12) und in das Gehäuseteil (11) eingreifenden Scheibenanordnung (17) gegen axial an der Hohlwelle (12) auftretende Kräfte abgestützt ist.

7. Dreh- und Schwenkverbindung nach Anspruch 5 oder 6, **dadurch gekennzeichnet, dass** das erste Gehäuseteil (11) in dem Bereich der Anordnung von Kugellager (16) und Scheibenanordnung (17) auf seiner Außenseite von einer aufgeschraubten Gehäusemutter (18) umgriffen ist.

8. Dreh- und Schwenkverbindung nach einem der Ansprüche 1 bis 7, **dadurch gekennzeichnet, dass** das zweite Gehäuseteil (25) um die durch das Achsenstück (27) gebildete Schwenkachse (29) mittels zweier auf den bezogen auf die das Achsenstück (27) rechtwinklig zu dessen Längsachse durchsetzenden Drehachse (13) der Hohlwelle (12) einander gegenüberliegenden Seiten des Achsenstücks (27) angeordneter Kugellager (36) schwenkbar gelagert ist.

9. Dreh- und Schwenkverbindung nach Anspruch 8, **dadurch gekennzeichnet, dass** die Kugellager (36) mittels eines in einer in der Verlaufsrichtung des Achsenstücks (27) in dem zweiten Gehäuseteil (25) ausgebildeten Montageöffnung (37) eingeschraübten Gewindestutzens (38) radial vorgespannt sind.

10. Dreh- und Schwenkverbindung nach einem der Ansprüche 1 bis 9, **dadurch gekennzeichnet, dass** die Aufnahmeöffnung (26) für den Lageransatz (21) der Hohlwelle (12) in dem zweiten Gehäuseteil (25) sich über die in der rechtwinklig zur Schwenkachse (29) liegenden Schwenkebene gelegene Breite des zweiten Gehäuseteils (25) erstreckt, sodass eine Verschwenkung des zweiten Gehäuseteils (25) zum ersten Gehäuseteil (11) um einen Winkel größer 120° möglich ist.

11. Dreh- und Schwenkverbindung nach einem der Ansprüche 1 bis 9, **dadurch gekennzeichnet, dass** die Aufnahmeöffnung (26) für den Lageransatz (21) der Hohlwelle (12) in dem zweiten Gehäuseteil (25) mit einer schräg in der rechtwinklig zur Schwenkachse (29) gelegenen Schwenkebene ausgerichteten Begrenzungskante (43) ausgebildet ist derart, dass eine Verschwenkung des zweiten Gehäuseteils (25) zum ersten Gehäuseteil (11) einseitig um einen Winkel bis zu 90° möglich ist.
